(19) Europäisches Patentamt
European Patent Office
Office européen des brevets

(11) **EP 2 223 092 B1**

(12) **FASCICULE DE BREVET EUROPEEN**

(45) Date de publication et mention de la délivrance du brevet:
**24.04.2019 Bulletin 2019/17**

(21) Numéro de dépôt: **08872250.9**

(22) Date de dépôt: **05.12.2008**

(51) Int Cl.:
***G01N 25/48*** *(2006.01)*       ***G01K 17/04*** *(2006.01)*

(86) Numéro de dépôt international:
**PCT/FR2008/001700**

(87) Numéro de publication internationale:
**WO 2009/098414 (13.08.2009 Gazette 2009/33)**

(54) **PROCEDE ET APPAREIL CALORIMETRIQUE D'ANALYSE THERMIQUE DIFFERENTELLE**

VERFAHREN UND VORRICHTUNG ZUR KALORIMETRISCHEN DIFFERENTIALTHERMOANALYSE

METHOD AND APPARATUS FOR CALORIMETRIC DIFFERENTIAL THERMAL ANALYSIS

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **12.12.2007 FR 0708660**

(43) Date de publication de la demande:
**01.09.2010 Bulletin 2010/35**

(73) Titulaire: **Centre National de la Recherche Scientifique
75016 Paris (FR)**

(72) Inventeurs:
• **GARDEN, Jean-Luc
F-38130 Echirolles (FR)**
• **CHAUSSY, Jacques
F-38130 Echirolles (FR)**

(74) Mandataire: **IPAZ
Parc Les Algorithmes, Bâtiment Platon
CS 70003 Saint-Aubin
91192 Gif-sur-Yvette Cedex (FR)**

(56) Documents cités:
**US-A- 3 022 664       US-A- 4 606 649
US-A- 5 711 604       US-A1- 2003 072 348
US-B1- 6 331 074**

**Description**

L'invention porte sur un procédé d'analyse thermique basé sur une mesure de type différentiel.

L'invention porte également sur un appareil pour la mise en oeuvre d'un tel procédé.

Dans le domaine de l'analyse thermique et de la calorimétrie, il existe différentes façons de procéder à des mesures différentielles. La plus ancienne est l'analyse thermique différentielle (en anglais Differential Thermal Analysis ou DTA). Conformément à cette méthode, deux cellules identiques dont l'une contient un échantillon à étudier, et dont l'autre contient un produit de référence, sont soumises à une variation temporelle de température, typiquement une rampe (augmentation linéaire de la température), dans des conditions identiques. La différence de température entre les deux cellules est mesurée de façon continue grâce à un ou plusieurs thermomètres (thermocouples, thermopiles, sondes résistives, etc.). Si au cours de la rampe, l'échantillon subit une transformation physico-chimique, tel qu'un changement de phase, ou présente un changement de sa capacité calorifique, la température de la cellule contenant l'échantillon varie de manière différente par rapport à la température de la cellule de référence. Au cours de cette rampe, la mesure différentielle de la température entre les deux cellules est donc représentative d'un événement thermique dû à l'échantillon (transformation physico-chimique, variation de capacité calorifique, etc.).

A partir de cette ancienne méthode est née la méthode appelée mesure enthalpique différentielle à balayage ou calorimétrie différentielle à balayage (en Anglais Differential Scanning Calorimetry ou DSC), qui est la plus utilisée actuellement. On dénote deux principes différents de cette méthode. Le premier s'appelle la calorimétrie différentielle à balayage à compensation de puissance (en Anglais Power Compensated Differential Scanning Calorimetry). Dans ce cas, au cours de la rampe les deux cellules sont maintenues à température égale grâce à un jeu de deux éléments de chauffages situés chacun sur chaque cellule. Dans ce cas, la différence de puissance à apporter via les éléments de chauffage (ou à extraire via des éléments de refroidissement), pour maintenir égal à zéro l'écart de température entre les deux cellules, est directement mesurée. Cette puissance thermique différentielle de compensation est alors directement représentative de la transformation physico-chimique (variation de capacité calorifique comprise) qui se produit dans l'échantillon au cours de la rampe. Le deuxième principe de fonctionnement s'appelle la calorimétrie différentielle à balayage à flux de chaleur (en Anglais Heat Flux Differential Scanning Calorimetry). Dans ce cas, la différence de flux de chaleur reliée à la différence de température entre les cellules est mesurée sans compensation à l'aide d'un thermoélément (thermocouple, thermopile). Comme en analyse thermique différentielle, dans ce dernier mode de fonctionnement, seule la différence de température (plus précisément la différence de flux de chaleur au travers du ou des thermoéléments) est représentative de la physico-chimie de l'échantillon. Pour une introduction à ces techniques, il est possible de se reporter aux références suivantes: S. Randzio, Recent developments in calorimetry, Ann. Rep. Prog. Chem., (The Royal Society of Chemistry) sect. C, 94, pp 433-504, (1998). C. Eyraud et A. Accary, Analyses thermique et calorimétrique différentielles, Techniques de l'Ingénieur, traité Analyse et Caractérisations, P1295, pp 1-15 (1992). M. Brun et P. Claudy, Méthodes Thermiques, Microcalorimétrie, Techniques de l'Ingénieur, traité Analyse et Caractérisations, P1200, pp 1-23 (1983). C. B. Murphy, Differential Thermal Analysis, Anal. Chem., 30, pp 867-872, 1958.

En plus de ces deux précédentes méthodes classiques d'analyse thermique, on assiste depuis quelques dizaines d'années à un foisonnement de méthodes nouvelles qui prévoient l'utilisation de variations temporelles de température de type « non trivial ». Conformément à ces méthodes, la variation de température des deux cellules doit suivre des fonctions bien déterminées du temps choisies par l'expérimentateur (dents de scie, oscillations, oscillations couplées à une rampe, etc.), qui se superposent à la rampe linéaire usuelle. Des exemples de ces techniques sont fournis par les documents US 5,224,775 et US 6,170,984. Ces documents se rapportent à la méthode connue comme mesure enthalpique différentielle à balayage modulée en température (en anglais Temperature Modulated Differential Scanning Calorimetry ou TMDSC), dans laquelle une oscillation de température est superposée à une rampe linéaire. La séparation des composantes continue et oscillante de la température différentielle (ou du flux de chaleur dans le cas d'une mesure différentielle en mode flux de chaleur) permet d'accéder à des données de signification physique différente. Enfin, un autre procédé d'analyse thermique basé sur une mesure de type différentiel est connu de US 6,331,074. Selon ce procédé, on soumet deux échantillons sensiblement identiques à une différence initiale de température de grandeur connue, puis on chauffe de façon asymétrique lesdits échantillons.

Ces techniques différentielles d'analyse thermique constituent des outils très puissants pour la caractérisation thermique des corps, et ont trouvé des applications en science des matériaux, sciences de la terre, physique, chimie, génie pharmaceutique et agro-alimentaire, etc. Elles souffrent néanmoins de certains inconvénients.

Un premier inconvénient est lié au fait que l'échantillon et le corps de référence n'ont pas, en pratique, exactement la même capacité calorifique. Souvent, ils présentent aussi des différences au niveau de leur propriétés de contact avec les parois des cellules de mesure, et donc de leurs conductances thermiques d'interface. De plus, suivant la construction des calorimètres, les coefficients d'échange thermique entre chaque cellule et le bain thermique ne sont jamais parfaitement identiques. Il en résulte des erreurs systématiques.

Pour remédier, au moins en partie, à cet inconvénient, il est usuel de soustraire à la mesure différentielle une courbe de référence, dite « ligne de base », qui est obtenue lors d'une mesure indépendante effectuée en utilisant un même corps de référence dans les deux cellules de mesure. En théorie cette soustraction permet de s'affranchir des effets de la dissymétrie thermique de l'appareillage, effets qui devraient en principe se retrouver de manière identique dans les deux mesures et pouvoir donc être totalement éliminés par soustraction. Cependant, il est impossible en pratique que les conditions thermiques instantanées (parasites, dérives thermiques, dérives de l'électronique, dérives des capteurs, etc.) soient exactement les mêmes au cours de ces deux mesures différentes. Par conséquent, des erreurs subsistent.

Un deuxième inconvénient est que, lorsque le système calorimétrique est bien conçu et que le bruit sur la mesure de température est uniquement du au bruit du capteur, le principe de mesure différentielle ne permet pas d'améliorer la résolution de la mesure, qui est donnée par le rapport signal sur bruit du capteur.

Un troisième inconvénient se rencontre lorsque la grandeur physique d'intérêt n'est pas celle qui est « directement » fournie par la mesure (par exemple, la capacité calorifique de l'échantillon), mais sa dérivée par rapport à la température. Cette dérivée ne peut être obtenue que par calcul numérique : mais il est bien connu qu'une telle opération a l'effet d'amplifier le bruit à haute fréquence qui affecte la mesure.

L'invention vise à pallier, au moins en partie, au moins un des inconvénients précités de l'art antérieur.

Le principe à la base de l'invention consiste à utiliser, lors de la mesure différentielle, deux échantillons sensiblement identiques présentant une différence de température connue, au lieu d'un échantillon et une référence. Ainsi, les conductances thermiques d'interface sont identiques dans les deux cellules et n'engendrent plus d'erreurs systématiques.

De plus, la méthode fournit directement la dérivée de la grandeur physique d'intérêt (typiquement la capacité calorifique) par rapport à la température. Il n'est donc plus nécessaire d'avoir recours à une opération de dérivation numérique. Si c'est la capacité calorifique qui est recherchée, il est possible de l'obtenir par intégration numérique : il en résulte une réduction du niveau de bruit par rapport aux techniques connues de l'art antérieur.

En outre, la différence de température initiale entre les deux échantillons constitue un degré de liberté additionnel permettant à l'utilisateur d'optimiser le procédé de mesure en fonction des phénomènes physiques ou physico-chimiques à mettre en évidence. En effet, le rapport signal sur bruit est d'autant plus grand que cette différence de température est importante ; mais le pouvoir de résolution en température de la mesure est d'autant meilleur que la différence de température est faible. De même, une variation rapide de température lors de la « rampe » entraine un bon rapport signal sur bruit mais un mauvais pouvoir de résolution en température. Ainsi, un procédé selon l'invention offre à son utilisateur la possibilité d'agir sur deux paramètres (la différence de température initiale et le taux de variation de température) pour réaliser un arbitrage optimal entre les exigences contradictoires de rapport signal sur bruit et de pouvoir de résolution en température, au lieu d'un seul (le taux de variation de la température) comme dans le cas de l'art antérieur.

Plus précisément, un objet de l'invention est un procédé selon la revendication 1. Selon l'invention, dans certains cas les échantillons suivront une même variation de température, ce qui nécessitera de leur apporter des puissances thermiques (légèrement) différentes ; dans d'autre cas, au contraire, ils seront soumis à une même puissance thermique, mais de ce fait leurs variations de température ne seront pas forcément identiques ; dans d'autres cas encore ils seront couplés de la même manière à un même bain thermique à température variable. Dans tous les cas, une information utile peut être extraite justement parce que la variation de température des deux échantillons est produite dans des conditions qui sont aussi proches que possible, sauf en ce qui concerne la différence de température initiale.

En particulier, la mesure différentielle peut permettre la détermination d'une propriété thermique d'un échantillon, choisie parmi : la capacité calorifique des échantillons, sa dérivée par rapport à la température, ou une chaleur latente.

Selon des modes de réalisation particuliers de l'invention :

- La mesure peut être effectuée par analyse thermique différentielle, ledit procédé comportant : la mesure d'une variation temporelle de la différence de température entre lesdits échantillons; et la détermination de la dérivée par rapport à la température de la capacité calorifique des échantillons à partir de ladite variation temporelle de leur différence de température.
- La mesure peut être effectuée par mesure enthalpique différentielle à balayage à compensation de puissance, ledit procédé comportant : l'apport ou l'extraction d'une puissance thermique différentielle desdits échantillons afin de maintenir constante ladite différence de température tout au long de la mesure ; et la détermination de la dérivée par rapport à la température de la capacité calorifique des échantillons à partir de ladite puissance thermique différentielle.
- La mesure peut être effectuée par mesure enthalpique différentielle à balayage à flux de chaleur et comporter : le couplage desdits échantillons à un bain thermique, par un même coefficient d'échange thermique connu ; la mesure d'une variation temporelle de la différence entre les flux de chaleur qui s'écoulent entre chacun des échantillons et ledit bain thermique ; et la détermination de la dérivée par rapport à la température de la capacité calorifique des échantillons à partir de ladite variation temporelle de la différence entre flux de chaleur.
- Ladite variation temporelle de température à laquelle sont soumis les échantillons peut être obtenue, au moins en partie, en couplant lesdits échantillons à un bain thermique soumis à son tour à une variation temporelle de température.

- En variante ou en complément, ladite variation temporelle de température à laquelle sont soumis les échantillons (peut être obtenue, au moins en partie, grâce à des moyens individuels de chauffage ou refroidissement associés à chaque échantillon.

- Le procédé peut comporter également une étape d'intégration numérique du résultat de ladite mesure différentielle pour déterminer la capacité calorifique desdits échantillons dans la plage de température dans laquelle ladite mesure a été effectuée.

- La variation temporelle de température à laquelle sont soumis lesdits échantillons peut être sensiblement linéaire ou linéaire par morceaux.

- La différence initiale de température entre lesdits échantillons peut être inférieure ou égale à un dixième, et de préférence inférieure ou égale à un centième, de l'étendue de la plage de variation de la température sur laquelle est effectuée la mesure.

Un autre objet de l'invention est un appareil d'analyse thermique pour la détermination d'une propriété thermique d'un échantillon, comportant une tête de mesure calorimétrique différentielle, caractérisé en ce qu'il comporte également des moyens de commande de ladite tête de mesure et d'analyse des données issues de mesure, adaptés pour la mise en oeuvre d'un procédé tel que décrit ci-dessus.

En particulier, l'invention concerne :

- un appareil selon la revendication 11 comprenant une tête pour analyse thermique différentielle.

- un appareil selon la revendication 12 comprenant une tête pour calorimétrie différentielle à balayage à compensation de puissance.

- un appareil selon la revendication 13 comprenant une tête pour calorimétrie différentielle à balayage à flux de chaleur.

- Les réceptacles peuvent être thermiquement couplés à un bain thermique par un même coefficient d'échange thermique connu, ledit bain thermique étant alors pourvu de moyens pour apporter ou extraire une puissance thermique afin d'induire une variation temporelle de sa température.

D'autres caractéristiques, détails et avantages de l'invention ressortiront à la lecture de la description faite en référence aux dessins annexés donnés à titre d'exemple et qui représentent, respectivement :

- La figure 1, un schéma simplifié d'un appareil permettant la mise en oeuvre d'un procédé de l'invention.
- La figure 2, un schéma très simplifié représentant le fonctionnement habituel d'un appareillage de calorimétrie différentielle à balayage.
- La figure 3, un schéma très simplifié représentant le fonctionnement d'un appareillage de calorimétrie différentielle à balayage utilisé pour la mise en oeuvre d'un procédé de mesure selon l'invention.
- La figure 4, la courbe de la capacité calorifique en fonction de la température d'un échantillon de polymère, le polytetrafluoroethylène (PTFE), mesurée conformément à une technique de l'art antérieur.
- La figure 5, la courbe de la dérivée en température de la capacité calorifique en fonction de la température de ce même échantillon, obtenue en dérivant mathématiquement la courbe de la figure 4 (ligne continue) et par mesure directe conformément à l'invention (ligne pointillée).
- Les figures 6A et 6B, des agrandissements des courbes de la figure 5, mettant en évidence les avantages de l'invention en terme de rapport signal sur bruit.

Dans les figures, des éléments identiques ou analogues sont identifiés par les mêmes chiffres de références.

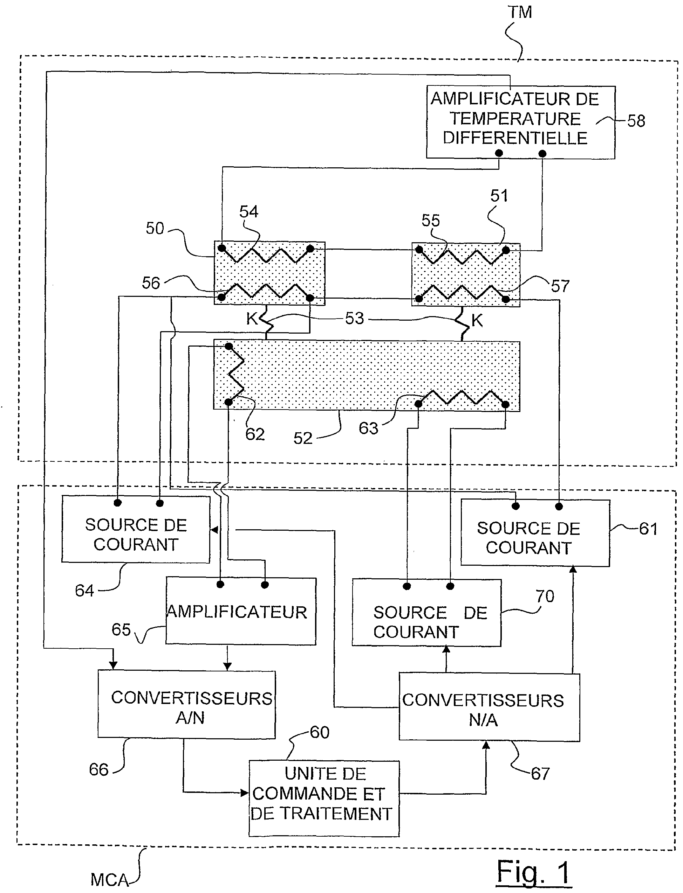

La figure 1 représente un appareil pour calorimétrie différentielle adaptée à la mise en oeuvre de l'invention. Un tel appareil se compose essentiellement d'une tête de mesure TM, qui peut être d'un type conventionnel (connu de l'art antérieur) et de moyens de commande et d'analyse des données MCA, spécialement adaptés à la mise en oeuvre de l'invention.
La tête de mesure TM comporte deux cellules de mesure 50, 51 reliées thermiquement à un bain thermique 52 dont la capacité calorifique peut être considérée infinie par rapport à celle des deux cellules 50 et 51. Le lien thermique 53 entre chaque cellule et le bain 52 est schématisé par un coefficient d'échange thermique K, identique pour les deux cellules. Ce lien thermique s'effectue de manière différente suivant les différents appareillages calorimétriques (gaz d'échange, conductance thermique d'un matériau déterminé, etc.). Les deux cellules 50, 51 sont isolées thermiquement l'une par rapport à l'autre, et elles sont sensiblement identiques du point de vue thermique. Chaque cellule comporte un élément thermométrique 54 et 55 et un élément chauffant 56 et 57 (en principe, un élément refroidissant pourrait également être utilisé, mais cela n'est pas usuel). Les éléments thermométriques peuvent fonctionner sur la base de principes de mesure différents : thermométrie résistive, thermométrie par thermocouple, thermopile, etc. Toutes ces techniques sont couramment exploitées en calorimétrie. Ces éléments thermométriques 54 et 55 sont montés en mode différentiel, par exemple en pont de Wheatstone, de façon à donner la différence de température entre les deux cellules 50 et 51. Cette différence de température est amplifiée par un amplificateur 58, convertie en signal numérique par un convertisseur analogique/numérique 66, puis transmise à une unité de commande et de traitement des données 60 pour être traitée en temps réel ou en différé.

La température « absolue » de l'une des deux cellules 50, 51, voire des deux, peut être elle-même mesurée, amplifiée, convertie en format numérique et transmise à l'unité de commande et de traitement 60 (non représenté). Cela peut être nécessaire pour la mise en oeuvre de certains modes de réalisation de l'invention, comme cela sera expliqué plus loin.

Les éléments chauffants (ou refroidissants) 56 et 57 sont pilotés par l'unité de commande et de traitement 60 par l'intermédiaire du convertisseur numérique/analogique 67 et de la source de courant 61, de manière à fournir aux deux cellules 50, 51 une puissance thermique prédéterminée (cette puissance peut être négative, dans le cas où des éléments refroidissants seraient utilisés).

L'établissement d'une différence de température initiale entre les deux cellules (ainsi que la compensation de puissance éventuelle lorsque l'appareil est utilisé en modalité DSC à compensation de puissance), nécessite un apport supplémentaire de puissance, qui peut être fourni par une source de courant indépendante 64, reliée à l'un des éléments chauffants (56, dans le cas de la figure).

Le bain thermique 52 est à son tour pourvu d'un thermomètre 62 (avec un amplificateur associé 65) et d'un élément de chauffage ou refroidissement 63, également piloté par l'unité de commande et de traitement 60 par l'intermédiaire du convertisseur numérique/analogique 67 et d'une autre source de courant 70. Généralement, c'est grâce à ce jeu d'éléments thermométriques 62 et chauffants 63 que les rampes de température ou toute autre variation de la température sont produites au niveau des cellules 50 et 51. Dans ce cas, les éléments 56, 57 jouent uniquement le rôle de moyens de chauffage ou refroidissement différentiel pour l'établissement de la différence initiale de température (et, le cas échéant, de moyens de compensation de puissance).

En variante, les éléments de chauffages 56 et 57 peuvent être utilisés pour produire directement les variations voulues de la température des cellules 50 et 51.

La tête de mesure TM peut être décomposée en trois chaînons différents. Le chaînon d'acquisition ou de mesure différentielle comporte les deux thermomètres 54 et 55, l'amplificateur de la mesure différentielle de température 58, une ou plusieurs cartes d'acquisition comprises dans le convertisseur 66, le tout étant relié à l'unité de commande et de traitement 60. Le chaînon de régulation thermique est asservi au chaînon de mesure différentielle, par exemple par une boucle de commande PID; il comporte les deux éléments de chauffage 56 et 57, les sources de courant 61 et 64, et le convertisseur numérique/analogique 67, ainsi que l'unité de commande et de traitement 60. Le troisième chaînon comporte un thermomètre 62 avec sa chaîne de mesure propre (amplificateur 65, convertisseur analogique-numérique 66, unité 60) et l'élément de chauffage 63 avec sa chaîne de commande le reliant à l'unité 60 de manière à contrôler la température du bain thermique 52.

La tête de mesure de l'appareil de la figure 1 est très générale, et peut servir aussi bien pour effectuer une mesure selon une technique connue de l'art antérieur (mesure d'analyse thermique différentielle simple, lorsque seule la différence de température est mesurée entre les deux cellules ; mesure enthalpique différentielle en mode flux de chaleur lorsque cette différence de température est mesurée à travers un thermo-élément tel qu'une thermopile ou une thermocouple ; mesure enthalpique différentielle à compensation de puissance dans le cas où la température différentielle entre les cellules 50 et 51 - quel que soit son mode de mesure - est maintenue égale à zéro grâce au jeu des deux chauffages 56 et 57 ; mesure par calorimétrie alternative lorsque les éléments de chauffage 56 et 57 sont utilisés pour envoyer de la puissance oscillante à une fréquence bien déterminée, la différence des températures oscillantes étant mesurée par le système d'acquisition constitué par les éléments 58 et 66 et 60 ; mesure par calorimétrie différentielle à modulation de température dans laquelle, en plus de la rampe, une oscillation de température est provoquée au niveau des cellules 50 et 51 via le bain 52, etc.) ou pour la mise en oeuvre de l'invention.

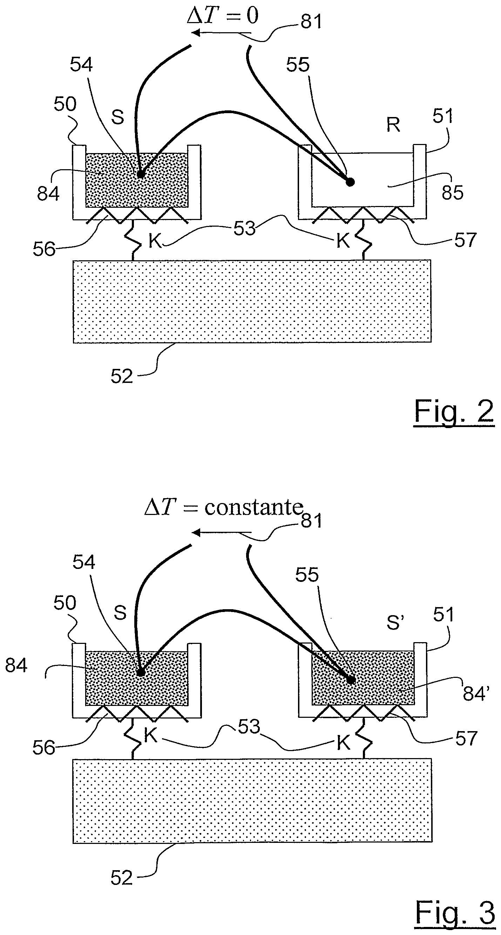

La figure 2 montre un schéma simplifié de mesure enthalpique différentielle à balayage par compensation de puissance, conformément à l'art antérieur. Un échantillon 84, dont on veut mesurer les propriétés physico-chimiques, est introduit dans la cellule 50, tandis que la cellule 51 est remplie d'un corps de référence 85 qui ne possède pas de variation de ces propriétés physico-chimiques notable dans l'intervalle de température considéré. On indique par S l'ensemble constitué par la cellule 50 et l'échantillon 84, et par R celui constitué par la cellule 51 et le corps de référence 85. Les ensembles S et R présentent une capacité calorifique sensiblement égale.

Lors de la réalisation de la mesure, la température de l'ensemble S ainsi que celle de l'ensemble R suivent toutes deux une rampe de température imposée soit via le bain 52, soit directement grâce aux deux éléments de chauffage 56 et 57. La différence de température entre les ensembles S et R, notée $\Delta T$ sur la figure 2, représentée schématiquement par une flèche 81, est asservie à une valeur nulle au cours de la rampe via le jeu des deux éléments de chauffage 56 et 57. Cette différence de température est mesurée par un thermocouple constitué de trois conducteurs et de deux soudures, 54 et 55.

En analyse enthalpique différentielle à balayage par compensation de puissance, la différence de puissance thermique absorbée par la référence 85 et l'échantillon 84, notamment à cause de changements physico-chimiques subis par ce dernier, est instantanément compensée par le jeu des deux chauffages 56 et 57. Cette puissance thermique différentielle de compensation est directement mesurée grâce à un système non représenté sur la figure 2, par exemple en utilisant la loi de Joule, via la mesure instantanée de la tension aux bornes des éléments 56 ou 57 et du courant de compensation qui traverse l'une ou l'autre résistance lors de l'expérience.

La figure 3 montre un schéma simplifié de mesure directe de la dérivée de la capacité calorifique d'un échantillon par rapport à la température, conformément à un mode de réalisation de l'invention. Plus précisément, il s'agit d'un mode de réalisation de l'invention basé sur le principe de la compensation de puissance.

Contrairement au procédé de la figure 2, les cellules 50, 51 contiennent toutes deux des échantillons 84, 84', en principe identiques. On dénote par S et S' les ensembles constitués, respectivement par la cellule 50 avec l'échantillon 84 et par la cellule 51 avec l'échantillon 84'.

En outre, une différence de température déterminée, notée ΔT et représentée schématiquement par une flèche 81, est imposée entre les deux ensembles S, S' et asservie à une valeur constante différente de zéro par le jeu des éléments de chauffage 56, 57. De manière analogue à ce qui se vérifie dans le procédé de la figure 2, la différence de puissance thermique absorbée par les deux échantillons 84, 84', est instantanément compensée par le jeu des deux chauffages 56 et 57. Cette puissance thermique différentielle de compensation, représentative de la différence de puissance dégagée ou absorbée par un échantillon 84 à une température T et un échantillon 84' à une température T + ΔT est directement mesurée grâce à un système non représenté sur la figure 3 ; par exemple, cette puissance peut être déterminée par la mesure du courant au travers des résistances 56 et 57 et de la tension à leurs bornes.

Il est important d'observer que, contrairement à ce qui se passe dans le procédé de l'art antérieur, les corps contenus dans les deux cellules de mesure 50, 51 subissent les mêmes transformations physico-chimiques pendant la rampe de température, seulement à des instants différents.

Selon le principe de fonctionnement décrit dans la figure 3, la présente invention permet de s'affranchir de certains des problèmes habituellement rencontrés en calorimétrie différentielle à balayage classique:

- Puisque, selon l'invention, les deux cellules sont remplies avec le même produit dont on veut étudier les propriétés thermiques, les asymétries thermiques dues aux problèmes d'interface avec les cellules réceptrices, entre un échantillon et une référence de nature différente, sont éliminées.
- La dérivée en température des signaux habituellement mesurés en calorimétrie différentielle à balayage est obtenue selon cette invention avec le même niveau de bruit que les signaux directs habituellement recueillis avec les méthodes différentielles classiques. Par intégration du signal de dérivée il est possible de remonter aux signaux directs habituels avec un niveau de bruit qui est alors bien inférieur (par exemple d'un facteur 10) à celui qui peut être obtenu par les techniques de l'art antérieur.

On donne ci-après une description mathématique du principe de la mesure selon un mode de réalisation non limitatif de l'invention.

Soient $T_S$ et $C_S$ la température et la capacité calorifique de l'ensemble S, $T_{S'}$ et $C_{S'}$ celles de l'ensemble S', $T_B$ la température du bain thermique, $\Delta T = T_S - T_{S'}$ et K le coefficient de couplage thermique entre les deux ensembles S, S' et le bain.

La température des deux cellules obéit à la loi générale de conservation de l'énergie qui est décrite par un système d'équations différentielles linéaires du premier ordre qui s'écrit :

$$\begin{cases} P_S - K(T_S - T_B) = C_S \dfrac{dT_S}{dt} \\[2mm] P_{S'} - K(T_{S'} - T_B) = C_{S'} \dfrac{dT_{S'}}{dt} \end{cases} \qquad (1)$$

où $P_S$ et $P_{S'}$ sont les puissances fournies aux ensembles S et S' par les éléments de chauffage 56, 57 respectivement.

En posant $T_S = T_{S'} + \Delta T$ on obtient :

$$\begin{cases} P_S - K(T_{S'} + \Delta T - T_B) = C_S \dfrac{dT_S'}{dt} + C_S \dfrac{d\Delta T}{dt} \\ P_{S'} - K(T_{S'} - T_B) = C_{S'} \dfrac{dT_{S'}}{dt} \end{cases} \qquad (2)$$

En faisant la différence entre ces deux équations, et en posant $\Delta P = P_S - P_{S'}$ et $\Delta C = C_S - C_{S'}$ on obtient :

$$\Delta P - K \cdot \Delta T = \Delta C \dfrac{dT_{S'}}{dt} + C_S \dfrac{d\Delta T}{dt} \qquad (3)$$

On suppose maintenant que l'élément de chauffage 57 soit piloté de manière à provoquer une augmentation linéaire (une rampe) de la température de l'ensemble S' avec $\dfrac{dT_{S'}}{dt} = \beta$ constant, et que la température $T_S$ soit asservie à suivre elle aussi la même rampe grâce à l'élément de chauffage 56, de manière à maintenir $\Delta T = \Delta T_0$ constante (et donc $\dfrac{d\Delta T}{dt} = 0$). On obtient ainsi :

$$\Delta P - K \cdot \Delta T_0 = \Delta C \beta \qquad (4)$$

Une autre simplification est obtenue en subdivisant la différence de puissance $\Delta P$ en deux termes : un terme constant $\Delta P_0$, qui sert à établir la différence initiale de température $\Delta T_0$, et qui vaut exactement $K\Delta T_0$, et un terme de compensation $\Delta P_C$ qui permet de maintenir $\Delta T = \Delta T_0$ pendant la « rampe » de température. On a donc :

$$\Delta P_C = \Delta C \beta \qquad (5)$$

A ce point, il faut considérer que les ensembles S et S' sont identiques, sauf en ce qui concerne leur température. La différence de capacité calorifique $\Delta C$ est entièrement due à cette différence de température et peut s'écrire :

$$\Delta C = C_S - C_{S'} = C_S(T_{S'} + \Delta T) - C_S(T_{S'}) \qquad (6)$$

En remplaçant (6) dans (5) et en divisant les membres de droite et de gauche par $\beta \Delta T$, on obtient :

$$\frac{\Delta P_C}{\beta \Delta T} = \frac{C_S(T + \Delta T) - C_S(T)}{\Delta T} \cong \left. \frac{dC_S}{dT} \right|_{\overline{T}} \qquad (7)$$

où l'indice « S' » de la température à été omis et :

$$\overline{T} = T + \tfrac{1}{2}(\Delta T) = \tfrac{1}{2}(T_S + T_{S'})$$

L'équation (7) montre que la mesure de la puissance thermique différentielle de compensation, de la différence de température constante entre les deux ensembles et du taux de variation de la température, permet de déterminer la dérivée de la capacité calorifique des échantillons par rapport à la température. Lors de la rampe, $T_S$ (et donc $\overline{T}$) varie à l'intérieur d'une plage prédéterminée. Par conséquent, l'équation (7) permet de calculer la dérivée $\left. \dfrac{dC_S}{dT} \right|_{\overline{T}}$ sur toute l'étendue de cette plage. La valeur de la capacité calorifique des échantillons en fonction de la température $C_S(T)$ peut donc être obtenue par simple intégration numérique ; la constante d'intégration peut être déterminée, si nécessaire, par une mesure calorimétrique indépendante.

En fait, l'équation (7) ne permet de déterminer $\left.\dfrac{dC_S}{dT}\right|_{T}$ que de manière approximative. En principe, l'approximation (et donc le pouvoir de résolution en température) est d'autant meilleure que $\Delta T$ est petit ; mais le rapport entre le signal ($\Delta P_C$) et le bruit de mesure est d'autant meilleur que $\Delta T$ est grand. Il faut donc trouver le meilleur compromis entre ces deux exigences contradictoires. L'équation 7 montre également que le signal mesuré ($\Delta P_C$) est d'autant plus grand que la montée en température est rapide (c'est à dire que $\beta$ est grand) ; mais une rampe trop rapide a également des effets adverses sur le pouvoir de résolution en température de la mesure, car la constante de temps thermique du calorimètre doit alors être prise en compte ; il serait alors nécessaire de déconvoluer le signal en tenant compte de cette constante de temps. Il faudra donc optimiser les paramètres $\Delta T$ et $\beta$ en fonction des propriétés de l'échantillon à étudier.

A titre d'exemple, on peut considérer un matériau présentant deux brusques variations de capacité calorifique à des températures proches, associée à deux transitions de phase. Ces variations se manifestent par deux pics rap-prochés de la dérivée $\dfrac{dC_S}{dT}$ et donc de la puissance thermique différentielle de compensation $\Delta P_C$. Dans ces conditions il y aura, en principe, un signal relativement intense, mais il faudra effectuer une mesure avec un bon pouvoir de résolution en température pour pouvoir séparer les deux pics. Il sera donc préférable d'utiliser pour la mesure des valeurs relativement faibles de $\Delta T$ et $\beta$. Par exemple, il est préférable que $\Delta T$ ne dépasse pas un dixième de la séparation entre les pics, ou de la largeur de chaque pic. Au contraire, dans le cas d'un échantillon présentant une variation lente et régulière de sa capacité calorifique, on pourra sacrifier le pouvoir de résolution en température pour améliorer le rapport signal sur bruit.

D'une manière générale, un critère indicatif est que $\Delta T$ ne devrait généralement pas dépasser un dixième ou un centième de l'amplitude de la plage de valeurs de température dans laquelle est effectuée la mesure (c'est à dire la plage de valeurs de température balayée par la « rampe »).

Une mesure conforme à l'invention peut également être réalisée en modalité flux de chaleur, sans compensation de puissance. Dans une telle mesure, la température de l'échantillon 84' peut être asservie à suivre une augmentation linéaire (une rampe) grâce à la variation en température du bain thermique. Dans ces conditions, la différence de température entre les deux échantillons ne reste pas constante : on peut écrire $\Delta T(t) = \Delta T_0 + \delta T(t)$. La mesure de cette différence de température permet de déterminer la dérivée de la capacité calorifique des échantillons par rapport à la température.

Pour comprendre ça, on peut partir de l'équation (3) ci-dessus. Contrairement à ce qui se passe en mode de compensation de puissance, la différence de puissance $\Delta P$ est maintenue constante et égale à $K\Delta T_0$

$$-K \cdot \delta T = \Delta C \underbrace{\frac{dT_{S'}}{dt}}_{=\beta} + C_S \underbrace{\frac{d\Delta T}{dt}}_{\underbrace{=\frac{d\delta T}{dt}}} \tag{8}$$

soit :

$$\Delta C = -\frac{K \cdot \delta T}{\beta} - \frac{C_S}{\beta}\frac{d\delta T}{dt} \tag{9}$$

Or, si la montée en température n'est pas trop rapide, et si l'écart de température $\delta T(t)$ varie assez lentement par rapport à la constante de temps du calorimètre, il est possible de simplifier l'équation (9) en négligeant le terme $\dfrac{C_S}{\beta}\dfrac{d\delta T}{dt}$. En divisant les membres de gauche et de droite par $\Delta T = \Delta T_0 + \delta T$ et en remplaçant $\Delta C$ par $C_S(T+\Delta T) - C_S(T)$ on obtient :

$$-\frac{K \cdot \delta T}{\beta(\Delta T_0 + \delta T)} = \frac{C_S(T + \Delta T) - C_S(T)}{\Delta T} \cong \frac{dC_S}{dT}\bigg|_{\overline{T}} \qquad (10)$$

Les remarques relatives aux valeurs optimales des paramètres β et ΔT, qui ont été faite au sujet de la méthode par compensation de puissance, s'appliquent également à ce mode de réalisation de l'invention.

Comme, selon le procédé de l'invention, les cellules de mesure 50 et 51 contiennent des corps sensiblement identiques, on peut s'attendre à ce que les dissymétries thermiques liées aux problèmes d'interface soient éliminées par rapport aux procédés selon l'art antérieur. Cependant, d'autres dissymétries thermiques résultant de la manière de fabriquer les calorimètres ne sont jamais totalement absentes : pour cette raison il peut être utile de déterminer, comme dans les procédés de l'art antérieur, une « ligne de base » à soustraire aux résultats des mesures. La détermination de la ligne de base se fait par une mesure effectuée conformément à l'invention ; simplement, l' « échantillon » utilisé est un « produit neutre », ne présentant pas de changements d'état dans la plage de température de la mesure et ayant une capacité calorifique relativement constante dans cette plage.

Il faut néanmoins remarquer que cette étape de détermination et soustraction de la ligne de base est nettement moins importante que dans l'art antérieur. En effet, l'erreur induite par la dissymétrie ne dépasse généralement pas quelques pourcent ($10^{-2}$) de la valeur de $\dfrac{dC_S}{dT}$. Or, lorsqu'on calcule $C_S(T)$ par intégration de sa dérivée obtenue par

$$C_S(T) = C_S^0 + \int_{T_1}^{T_2}\left(\frac{dC_S}{dT}\right)dT,$$

une mesure selon l'invention, la constante d'intégration $C_S^0$ est nettement prépondérante, et l'intégrale ne contribue que pour quelques pourcent ou pour mille ($10^{-2}$, $10^{-3}$). L'erreur due à l'asymétrie qui affecte le mesure de $\dfrac{dC_S}{dT}$ ne représente donc, au final, que $10^{-4}$-$10^{-5}$ de la capacité calorifique. Dans l'art antérieur, au contraire, l'erreur d'asymétrie affecte directement la mesure de la capacité calorifique et est de l'ordre de quelques pourcent de cette dernière.

La théorie à la base de l'invention a été décrite en détail dans le cas d'une « rampe » de température linéaire, dans laquelle $\dfrac{dT_{S'}}{dt} = \beta$ constant. En réalité, une variation temporelle non linéaire de la température peut être utilisée, à la seule condition qu'il soit possible de l'approcher par une variation linéaire par morceaux, de manière à pouvoir définir localement la valeur de β. En particulier, il est tout à fait possible de mettre en oeuvre le procédé de l'invention au moyen d'un calorimètre « alternatif », imposant une variation sinusoïdale de température superposée à une rampe linéaire ou quasi-linéaire.

La notion de variation linéaire par morceaux couvre également le cas où, pendant une certaine période, la température d'un échantillon ou des deux resterait constante malgré un apport de puissance thermique. Une telle situation se vérifie, par exemple, en présence d'une transition de phase du premier ordre. Dans ces conditions, la notion de capacité calorifique perd temporairement de sens, remplacée par celle de chaleur latente, mais le procédé de l'invention permet néanmoins de mettre en évidence un « événement thermique » qui apporte des informations sur les propriétés physiques des échantillons. La même situation se présente d'ailleurs dans les techniques connues de l'art antérieur.

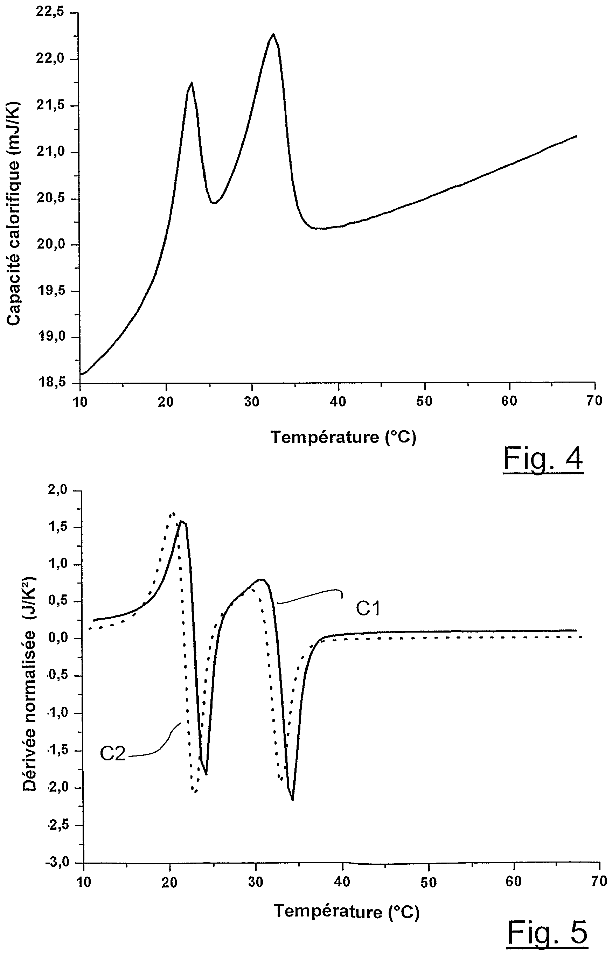

La figure 4 montre la courbe de capacité calorifique d'un échantillon de polytetrafluoroethylène en fonction de la température dans une gamme comprise entre 10 °C et 70 °C. Cette courbe a été mesurée à l'aide d'un microcalorimètre fabriqué dans le laboratoire de l'inventeur et fonctionnant selon le principe de l'oscillation en température. L'échantillon utilisé est un disque de film mince de polytetrafluoroethylène de 50 μm d'épaisseur et de surface de 1 cm$^2$ (masse environ égale à 5 mg). La variation temporelle de la température de l'échantillon consiste d'une rampe de 0,5 °C/mn à laquelle est superposée une oscillation sinusoïdale dont l'amplitude pic à pic est de 0,1 °C et la fréquence est de 0,32 Hz. On reconnaît sur cette figure les deux transitions de phases caractéristiques du PTFE à 292 K et 303 K : voir l'article de E. Château, J.-L. Garden, O. Bourgeois et J. Chaussy, Appl. Phys. Lett. 86, 151913 (2005).

La figure 5 montre la dérivée normalisée (prise en compte des gains des préamplificateurs, étalonnage des thermomètres, etc.) en fonction de la température de la capacité calorifique de l'échantillon de PTFE décrit ci-dessus. La courbe C1, en trait plein, représente la dérivée numérique calculée à partir des points expérimentaux de la figure 4. La courbe C2, en pointillé, est la mesure directe de la dérivée obtenue grâce à la mesure différentielle selon l'invention,

pour $\Delta T_0$=1,3 °C. Le décalage en température entre les deux courbes est un artefact qui peut être corrigé. En effet le procédé de l'invention fournit la valeur de la dérivée de la capacité calorifique en fonction d'une température moyenne $\overline{T}$, comme cela a été montré plus haut. Le décalage vertical visible sur la figure pourrait être supprimé simplement par une meilleure calibration des chaînes électroniques utilisées dans les deux types d'expériences (selon l'invention et par mesure directe de C(T)), ainsi que par un meilleur étalonnage des différents thermomètres utilisés.

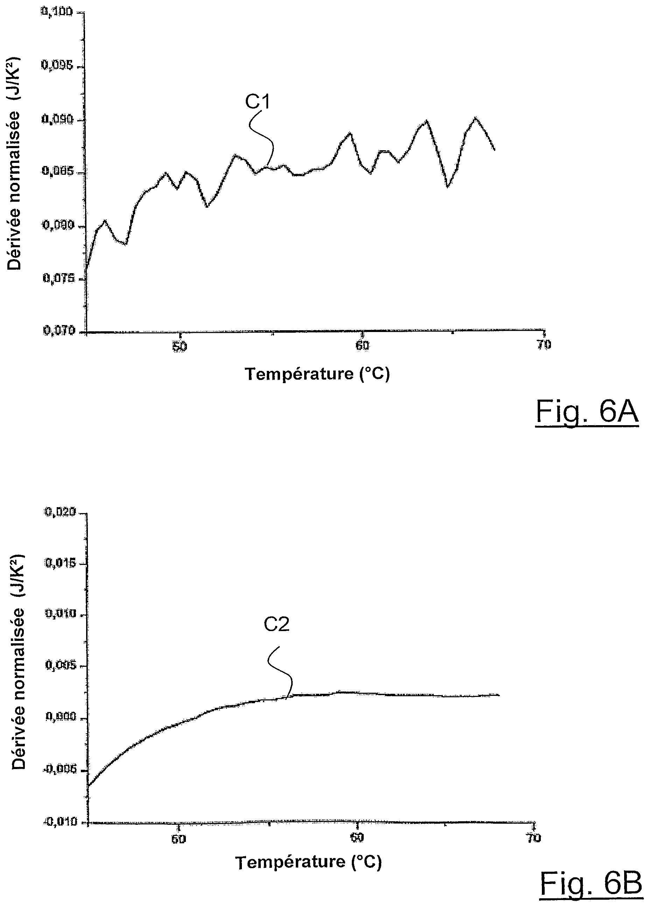

La comparaison des agrandissements des courbes C1 et C2, reproduits sur les figures 6A et 6B, met en évidence la réduction de niveau de bruit obtenue grâce à l'invention.

Dans la description ci-dessus on a supposé que les échantillons soient disposés à l'intérieur de cellules fermées. Cela n'est pas toujours nécessaire : des calorimètres du commerce, susceptibles d'être adaptés à la mise en oeuvre de l'invention, ne comportent que des supports semblables à des plateaux de balance, intégrant les éléments thermométriques et chauffants et sur lesquels on pose simplement les échantillons, éventuellement enfermés dans des capsules. Plus généralement, toute sorte de réceptacle peut convenir à la réalisation de cellules de mesure pour la mise en oeuvre de l'invention.

Le mode de réalisation de l'invention basé sur le principe de la compensation de puissance a été décrit sur la base d'un exemple dans lequel la variation de la température des échantillons est obtenue directement au moyen des éléments individuels de chauffage ou de refroidissement associé à chaque cellule. Inversement, le mode de réalisation sans compensation de puissance a été décrit en référence à un exemple dans lequel la variation de température des échantillons est obtenue par l'intermédiaire du bain thermique. Il faut comprendre que ces exemples ne sont pas limitatifs : quelle que soit la technique de mesure utilisée, la variation de température peut être commandée soit directement, soit par l'intermédiaire du bain thermique, soit par une combinaison des deux méthodes. Cela est d'ailleurs connu de l'art antérieur.

## Revendications

1. Procédé d'analyse thermique pour la détermination d'une propriété thermique d'un échantillon, comportant une mesure différentielle d'un paramètre physique entre deux échantillons (84, 84'), lesdits échantillons étant sensiblement identiques quant à leur composition et à leur propriétés thermiques, procédé dans lequel lesdits échantillons présentent, au début de la mesure, une différence initiale de température de grandeur connue et **caractérisé en ce que**, lors de la mesure, lesdits échantillons sont soumis soit à une même variation de température, soit à une même puissance thermique.

2. Procédé d'analyse thermique selon la revendication 1, dans lequel la mesure différentielle permet la détermination d'une propriété thermique d'un échantillon, choisie parmi : la capacité calorifique des échantillons, sa dérivée par rapport à la température, ou une chaleur latente.

3. Procédé selon la revendication 2, dans lequel la mesure est effectuée par analyse thermique différentielle, ledit procédé comportant :

   - la mesure d'une variation temporelle de la différence de température entre lesdits échantillons; et
   - la détermination de ladite propriété thermique à partir de ladite variation temporelle de leur différence de température.

4. Procédé selon la revendication 2, dans lequel la mesure est effectuée par mesure enthalpique différentielle à balayage à compensation de puissance, ledit procédé comportant :

   - l'apport ou l'extraction d'une puissance thermique différentielle desdits échantillons (84, 84') afin de maintenir constante ladite différence de température tout au long de la mesure ; et
   - la détermination de ladite propriété thermique à partir de ladite puissance thermique différentielle.

5. Procédé selon la revendication 2, dans lequel la mesure est effectuée par mesure enthalpique différentielle à balayage à flux de chaleur et comporte :

   - le couplage desdits échantillons (84, 84') à un bain thermique (52), par un même coefficient d'échange thermique connu (53, K) ;
   - la mesure d'une variation temporelle de la différence entre les flux de chaleur qui s'écoulent entre chacun des échantillons (84, 84') et ledit bain thermique (52) ; et

- la détermination de ladite propriété thermique à partir de ladite variation temporelle de la différence entre flux de chaleur.

6. Procédé selon l'une des revendications précédentes dans lequel ladite variation temporelle de température à laquelle sont soumis les échantillons (84, 84') est obtenue, au moins en partie, en couplant lesdits échantillons à un bain thermique (52) soumis à son tour à une variation temporelle de température.

7. Procédé selon l'une des revendications précédentes dans lequel ladite variation temporelle de température à laquelle sont soumis les échantillons (84, 84') est obtenue, au moins en partie, grâce à des moyens individuels (56, 57) de chauffage ou refroidissement associés à chaque échantillon.

8. Procédé selon l'une des revendications 2 à 7 comportant également une étape d'intégration numérique du résultat de ladite mesure différentielle pour déterminer la capacité calorifique desdits échantillons (84, 84') dans la plage de température dans laquelle ladite mesure a été effectuée.

9. Procédé selon l'une des revendications précédentes, dans lequel la variation temporelle de température à laquelle sont soumis lesdits échantillons est sensiblement linéaire ou linéaire par morceaux.

10. Procédé selon l'une des revendications précédentes, dans lequel la différence initiale de température entre lesdits échantillons est inférieure ou égale à un dixième, et de préférence inférieure ou égale à un centième, de l'étendue de la plage de variation de la température sur laquelle est effectuée la mesure.

11. Appareil d'analyse thermique pour la détermination d'une propriété thermique d'un échantillon, comportant une tête de mesure calorimétrique différentielle (TM) ; **caractérisé en ce qu'**il comporte également des moyens (MCA) de commande de ladite tête de mesure et d'analyse des données issues de mesure, adaptés pour la mise en oeuvre d'un procédé selon l'une des revendications précédentes et dans lequel ladite tête de mesure calorimétrique différentielle (TM) est une tête pour analyse thermique différentielle, comportant :

- deux réceptacles (50, 51) ayant des propriétés thermiques sensiblement identiques, pour recevoir des échantillons (84, 84') sensiblement identiques;
- des moyens (56, 57, 63) pour apporter ou extraire une puissance thermique desdits échantillons ;
- des moyens (56, 57) de chauffage ou refroidissement différentiel desdits échantillons pour imposer une différence initiale de température de grandeur connue ; et
- des moyens de mesure (54, 55, 58) de la différence de température instantanée entre lesdits échantillons et du taux de variation temporelle de la température d'au moins l'un desdits échantillons ;

lesdits moyens de commande et d'analyse (MCA) comportant :

- des moyens de commande (60, 67, 70) desdits moyens (56, 57, 63) pour apporter ou extraire une puissance thermique des échantillons, adaptés pour soumettre lesdits échantillons soit à une même variation de température, soit à une même puissance thermique; et
- des moyens (60) de calcul de ladite propriété thermique des échantillons à partir au moins de la connaissance de ladite différence initiale de température, du taux de variation de la température de l'un des échantillons et de la différence de température instantanée entre lesdits échantillons.

12. Appareil d'analyse thermique pour la détermination d'une propriété thermique d'un échantillon, comportant une tête de mesure calorimétrique différentielle (TM) ; **caractérisé en ce qu'**il comporte également des moyens (MCA) de commande de ladite tête de mesure et d'analyse des données issues de mesure, adaptés pour la mise en oeuvre d'un procédé selon l'une des revendications 1 à 10 et dans lequel ladite tête de mesure calorimétrique différentielle (TM) est une tête pour calorimétrie différentielle à balayage à compensation de puissance, comportant :

- deux réceptacles (50, 51) ayant des propriétés thermiques sensiblement identiques, pour recevoir des échantillons (84, 84') sensiblement identiques;
- des moyens (56, 57, 63) pour apporter ou extraire une puissance thermique desdits échantillons ;
- des moyens (56, 57) de chauffage ou refroidissement différentiel desdits échantillons pour imposer une différence initiale de température de grandeur connue;
- des moyens (54, 55, 58) de mesure de la température instantanée desdits échantillons et de leur différence de température ;

lesdits moyens de commande et d'analyse comportant :

- des moyens de commande (60, 67, 70) desdits moyens (56, 57, 63) pour apporter ou extraire une puissance thermique des échantillons, ces moyens de commande étant adaptés pour soumettre lesdits échantillons soit à une même variation temporelle de température soit à une même puissance thermique tout en maintenant leur différence de température constante et égale à ladite différence initiale ; et
- des moyens (60) de calcul de ladite propriété thermique des échantillons à partir au moins de la connaissance de ladite différence de température initiale, du taux de variation temporelle de la température des échantillons et de la différence de la puissance apportée ou extraite desdits échantillons par les moyens correspondants pour maintenir constante ladite différence de température.

13. Appareil d'analyse thermique pour la détermination d'une propriété thermique d'un échantillon, comportant une tête de mesure calorimétrique différentielle (TM) ; **caractérisé en ce qu'**il comporte également des moyens (MCA) de commande de ladite tête de mesure et d'analyse des données issues de mesure, adaptés pour la mise en oeuvre d'un procédé selon l'une des revendications 1 à 10 et dans lequel ladite tête de mesure calorimétrique différentielle (TM) est une tête pour calorimétrie différentielle à balayage à flux de chaleur, comportant :

- deux réceptacles (50, 51) ayant des propriétés thermiques sensiblement identiques, pour recevoir des échantillons (84, 84') sensiblement identiques;
- des moyens (56, 57, 63) pour apporter ou extraire une puissance thermique desdits échantillons ;
- des moyens (56, 57) de chauffage ou refroidissement différentiel desdits réceptacles pour imposer une différence initiale de température de grandeur connue entre les échantillons ; et
- des moyens (54, 55, 58) de mesure de la température instantanée desdits échantillons, de leur différence de température ainsi que d'un flux de chaleur entrant ou sortant de chaque échantillon;

lesdits moyens de commande et d'analyse comportant :

- des moyens de commande (60, 67, 70) desdits moyens (56, 57, 63) pour apporter ou extraire une puissance thermique des échantillons, adaptés pour soumettre lesdits échantillons soit à une même variation de température, soit à une même puissance thermique; et
- des moyens (60) de calcul de ladite propriété thermique des échantillons à partir au moins de la connaissance dudit coefficient d'échange thermique, de ladite différence initiale de température, du taux de variation de la température de l'un des échantillons et de la différence de température instantanée entre lesdits échantillons.

14. Appareil d'analyse thermique selon l'une des revendications 11 à 13, dans lequel lesdits réceptacles sont thermiquement couplés à un bain thermique (52) par un même coefficient d'échange thermique connu (53, K), ledit bain thermique étant pourvu de moyens (63) pour apporter ou extraire une puissance thermique afin d'induire une variation temporelle de sa température.

**Patentansprüche**

1. Verfahren zur thermischen Analyse zur Bestimmung einer thermischen Eigenschaft einer Probe, beinhaltend eine Differenzmessung eines physischen Parameters zwischen zwei Proben (84, 84'), wobei die Proben in ihrer Zusammensetzung und ihren thermischen Eigenschaften im Wesentlichen gleich sind, bei welchem die Proben am Anfang der Messung eine Ausgangstemperaturdifferenz von bekannter Größe aufweisen, und **dadurch gekennzeichnet, dass** bei der Messung die Proben entweder einer gleichen Temperaturänderung oder einer gleichen Wärmeleistung unterworfen werden.

2. Verfahren zur thermischen Analyse nach Anspruch 1, bei welchem mittels der thermischen Analyse eine thermische Eigenschaft einer Probe, wahlweise die Wärmekapazität der Proben, ihre Ableitung im Verhältnis zu Temperatur oder eine latente Wärme, bestimmt werden kann.

3. Verfahren nach Anspruch 2, bei welchem die Messung durch thermische Differentialabtastung ausgeführt wird, wobei das Verfahren beinhaltet:

- die Messung einer zeitlichen Änderung der Temperaturdifferenz zwischen den Proben; und
- die Bestimmung der thermischen Eigenschaft anhand der zeitlichen Änderung ihrer Temperaturdifferenz.

**4.** Verfahren nach Anspruch 2, bei welchem die Messung durch Differentialenthalpiemessung mit Leistungskompensationsabtastung ausgeführt wird, wobei das Verfahren beinhaltet:

- die Zufuhr oder Abführung einer Differenzwärmeleistung der Proben (84, 84'), um die Temperaturdifferenz während der Messung konstant zu halten; und
- die Bestimmung der thermischen Eigenschaft anhand der Differenzwärmeleistung.

**5.** Verfahren nach Anspruch 2, bei welchem die Messung durch Differentialenthalpiemessung mit Wärmeflussabtastung ausgeführt wird und beinhaltet:

- die Koppelung der Proben (84, 84') mit einem Wärmebad (52) durch einen gleichen, bekannten Wärmeübertragungskoeffizient (53, K);
- die Messung einer zeitlichen Änderung der Differenz zwischen den Wärmeflüssen, die jeweils zwischen den Proben (84, 84') und dem Wärmebad (52) fließen; und
- die Bestimmung der thermischen Eigenschaft anhand der zeitlichen Änderung der Differenz zwischen den Wärmeflüssen.

**6.** Verfahren nach einem der vorhergehenden Ansprüche, bei welchem die zeitliche Änderung der Temperatur, welcher die Proben (84, 84') ausgesetzt sind, zumindest teilweise durch Koppelung der Proben mit einem Wärmebad (52) erreicht wird, welches wiederum einer zeitlichen Temperaturänderung unterworfen wird.

**7.** Verfahren nach einem der vorhergehenden Ansprüche, bei welchem die zeitliche Temperaturänderung, welcher die Proben (84, 84') unterworfen werden, zumindest teilweise mit individuellen, der jeweiligen Probe zugeordneten Heiz- oder Kühleinrichtungen (56, 57) erreicht wird.

**8.** Verfahren nach einem der Ansprüche 2 bis 7, beinhaltend auch einen Schritt der digitalen Integration des Ergebnisses der Differenzmessung zur Bestimmung der Wärmekapazität der Proben (84, 84') innerhalb des Temperaturbereichs, innerhalb dessen die Messung ausgeführt wurde.

**9.** Verfahren nach einem der vorhergehenden Ansprüche, bei welchem die zeitliche Temperaturänderung, der die Proben unterworfen werden, im Wesentlichen linear oder stückweise linear verläuft.

**10.** Verfahren nach einem der vorhergehenden Ansprüche, bei welchem die Ausgangstemperaturdifferenz zwischen den Proben kleiner oder gleich einem Zehntel und vorzugsweise kleiner oder gleich einem Hundertstel der Erstreckung des Temperaturänderungsbereichs ist, in welcher die Messung ausgeführt wird.

**11.** Vorrichtung zur thermischen Analyse zur Bestimmung einer thermischen Eigenschaft einer Probe, beinhaltend einen Differentialkalorimetriemesskopf (TM); **dadurch gekennzeichnet, dass** sie auch Einrichtungen (MCA) zur Steuerung des Messkopfes und zur Analyse der Messdaten beinhaltet, welche zur Umsetzung eines Verfahrens nach einem der vorhergehenden Ansprüche geeignet sind, und bei welchem der Differentialkalorimetriemesskopf (TM) ein Kopf für thermische Differentialabtastung ist, beinhaltend:

- zwei Behälter (50, 51) mit im Wesentlichen gleichen, thermischen Eigenschaften zur Aufnahme von im Wesentlichen gleichen Proben (84, 84');
- Einrichtungen (56, 57, 63) zur Zufuhr oder Abführung einer Wärmeleistung der Proben;
- Einrichtungen (56, 57) zur differentielle Erwärmung oder Abkühlung der Proben zur Erzwingung einer Ausgangstemperaturdifferenz von bekannter Größe; und
- Messeinrichtungen (54, 55, 58) der augenblicklichen Temperaturdifferenz zwischen den Proben und der zeitlichen Temperaturänderungsrate wenigstens einer der Proben;

wobei die Steuer- und Analyseeinrichtungen (MCA) beinhalten:

- Steuereinrichtungen (60, 67, 70) der Einrichtungen (56, 57, 63) zur Zufuhr oder Abführung einer Wärmeleistung der Proben, welche dazu geeignet sind, die Proben entweder einer gleichen Temperaturänderung oder einer gleichen Wärmeleistung zu unterwerfen; und
- Einrichtungen (60) zur Berechnung der thermischen Eigenschaft der Proben anhand wenigstens der Kenntnis der Ausgangstemperaturdifferenz, der Temperaturänderungsrate einer der Proben und der augenblicklichen Temperaturdifferenz zwischen den Proben.

**12.** Vorrichtung zur thermischen Analyse zur Bestimmung einer thermischen Eigenschaft einer Probe, beinhaltend einen Differentialkalorimetriemesskopf (TM); **dadurch gekennzeichnet, dass** sie auch Einrichtungen (MCA) zur Steuerung des Messkopfes und zur Analyse der Messdaten beinhaltet, welche zur Umsetzung eines Verfahrens nach einem der Ansprüche 1 bis 10 geeignet sind, und bei welchem der Differentialkalorimetriemesskopf (TM) ein Kopf für thermische Differentialabtastung mit Leistungskompensation ist, beinhaltend:

- zwei Behälter (50, 51) mit im Wesentlichen gleichen, thermischen Eigenschaften zur Aufnahme von im Wesentlichen gleichen Proben (84, 84');
- Einrichtungen (56, 57, 63) zur Zufuhr oder Abführung einer Wärmeleistung der Proben;
- Einrichtung (56, 57) zur differentiellen Erwärmung oder Abkühlung der Proben zur Erzwingung einer Ausgangstemperaturdifferenz von bekannter Größe; und
- Einrichtungen (54, 55, 58) zur Messung der augenblicklichen Temperatur der Proben und derer Temperaturdifferenz;

wobei die Steuer- und Analyseeinrichtungen beinhalten:

- Steuereinrichtungen (60, 67, 70) der Einrichtungen (56, 57, 63) zur Zufuhr oder Abführung einer Wärmeleistung der Proben, wobei die Steuereinrichtungen dazu geeignet sind, die Proben entweder einer gleichen zeitlichen Temperaturänderung oder einer gleichen Wärmeleistung zu unterwerfen, während ihre Temperaturdifferenz konstant und gleich der Ausgangsdifferenz gehalten wird; und
- Einrichtungen (60) zur Berechnung der thermischen Eigenschaft der Proben anhand wenigstens der Kenntnis der Ausgangstemperaturdifferenz, der zeitlichen Temperaturänderungsrate der Proben und der Differenz der durch die entsprechenden Einrichtungen abgegebenen oder abgeführten Leistung der Proben, um die Temperaturdifferenz konstant zu halten.

**13.** Vorrichtung zur thermischen Analyse zur Bestimmung einer thermischen Eigenschaft einer Probe, beinhaltend einen Differentialkalorimetriemesskopf (TM); **dadurch gekennzeichnet, dass** sie auch Einrichtungen (MCA) zur Steuerung des Messkopfes und zur Analyse der Messdaten beinhaltet, welche zur Umsetzung eines Verfahrens nach einem der Ansprüche 1 bis 10 geeignet sind, und bei welchem der Differentialkalorimetriemesskopf (TM) ein Kopf für thermische Differentialkalorimetrie mit Wärmeflussabtastung ist, beinhaltend:

- zwei Behälter (50, 51) mit im Wesentlichen gleichen, thermischen Eigenschaften zur Aufnahme von im Wesentlichen gleichen Proben (84, 84');
- Einrichtungen (56, 57, 63) zur Zufuhr oder Abführung einer Wärmeleistung der Proben;
- Einrichtungen (56, 57) zur differentiellen Erwärmung oder Abkühlung der Behälter zur Erzwingung einer Ausgangstemperaturdifferenz von bekannter Größe zwischen den Proben; und
- Einrichtungen (54, 55, 58) zur Messung der augenblicklichen Temperatur der Proben, ihrer Temperaturdifferenz sowie eines in die jeweiligen Proben eintretenden oder aus den jeweiligen Proben abgehenden Wärmeflusses;

wobei die Steuer- und Analyseeinrichtungen beinhalten:

- Steuereinrichtungen (60, 67, 70) der Einrichtungen (56, 57, 63) zur Zufuhr oder Abführung einer Wärmeleistung der Proben, die dazu geeignet sind, die Proben entweder einer gleichen Temperaturänderung oder einer gleichen Wärmeleistung zu unterwerfen; und
- Einrichtungen (60) zur Berechnung der thermischen Eigenschaft der Proben anhand wenigstens der Kenntnis des Wärmeübertragungskoeffizients, der Ausgangstemperaturdifferenz, der Temperaturänderungsrate einer der Proben und der augenblicklichen Temperaturdifferenz zwischen den Proben.

**14.** Vorrichtung zur thermischen Analyse nach einem der Ansprüche 11 bis 13, bei welchem die Behälter mit einem Wärmebad (52) durch einen gleichen, bekannten Wärmeübertragungskoeffizient (53, K) gekoppelt sind, wobei das Wärmebad mit Einrichtungen (63) zur Zufuhr oder Abführung einer Wärmeleistung ausgestattet sind, um eine zeitliche Änderung dessen Temperatur herbeizuführen.

**Claims**

**1.** A thermal analysis method for determining a thermal property of a sample, the method comprising differential measurement of a physical parameter between two samples (84, 84'), wherein the samples are substantially identical as to their composition and as to their thermal properties, wherein, at the beginning of measurement, the samples present an initial temperature difference of known magnitude, **characterized in that**, during the measurement, the samples are subjected either to a same temperature variation or to a same heat power.

2. The thermal analysis method according to claim 1, wherein the differential measurement serves to determine a thermal property of a sample selected from: the heat capacity of the samples, its derivative relative to temperature, or a latent heat.

3. The method according to claim 2, wherein the measurement is performed by differential temperature analysis, the method comprising:

   • measuring variation over time in the temperature difference between said samples; and
   • determining said thermal property from said variation over time of their temperature difference.

4. The method according to claim 2, wherein the measurement is performed by power compensation differential scanning enthalpy measurement, said method comprising:

   • delivering or extracting differential heat power to or from said samples (84, 84') in order to maintain said temperature difference constant throughout the measurement; and
   • determining said thermal property from said differential heat power.

5. The method according to claim 2, wherein the measurement is performed by heat flux scanning differential enthalpy measurement, and comprises:

   • coupling said samples (84, 84') to a thermal bath (52) using the same known heat transfer coefficient (53, K) ;
   • measuring variation over time in the difference between the heat fluxes that flow between each of the samples (84, 84') and said thermal bath (52); and
   • determining said thermal property from said variation over time in the difference between the heat fluxes.

6. The method according to any preceding claim, wherein said variation over time in the temperature to which the samples (84, 84') are subjected is itself obtained, at least in part, by coupling said samples to a thermal bath (52) that is in turn subjected to temperature variation over time.

7. The method according to any preceding claim, wherein said variation over time in the temperature to which the samples (84, 84') are subjected is itself obtained, at least in part, by individual heater or cooling means (56, 57) associated with each sample.

8. The method according to any one of claims 2 to 7, also including a step of numerically integrating the result of said differential measurement in order to determine the heat capacities of said samples (84, 84') in the temperature range within which said measurement was performed.

9. The method according to any preceding claim, wherein the variation over time in the temperature to which said samples are subjected is substantially linear or piecewise linear.

10. The method according to any preceding claim, wherein the initial temperature difference between said samples is less than or equal to one-tenth, and preferably less than or equal to one-hundredth, of the extent of the temperature variation range over which the measurement is performed.

11. Thermal analysis apparatus for determining a thermal property of a sample, the apparatus comprising a differential calorimeter measurement head (TM), **characterized in that** it further comprises control means (MCA) for controlling said measurement head and for analyzing data obtained by the measurement, the control means being adapted to implement a method according to any of claims 1 to 10, and wherein said differential calorimeter measurement head (TM) is a head for performing differential thermal analysis, and comprises:

   • two receptacles (50, 51) having substantially identical thermal properties, for receiving substantially identical samples (84, 84');
   • means (56, 57, 63) for delivering or extracting heat power to or from said samples;
   • heater or cooling means (56, 57) for differentially heating or cooling said samples so as to impose an initial temperature difference of known magnitude; and
• measurement means (54, 55, 58) for measuring the instantaneous temperature difference between said samples and for measuring the rate at which the temperature of at least one of said samples varies over time;

said control and analysis means (MCA) comprising:

• control means (60, 67, 70) for controlling said means (56, 57, 63) for delivering or extracting heat power to or from the samples, and adapted to subject said samples either to a same temperature variation or to a same heat power; and
• means (60) for calculating said thermal property of the samples from at least knowledge of said initial temperature difference, of the rate at which the temperature of one of the samples varies, and of the instantaneous temperature difference between said samples.

12. Thermal analysis apparatus for determining a thermal property of a sample, the apparatus comprising a differential calorimeter measurement head (TM), **characterized in that** it further comprises control means (MCA) for controlling said measurement head and for analyzing data obtained by the measurement, the control means being adapted to implement a method according to any of claims 1 to 10, and wherein said differential calorimeter measurement head (TM) is a head for performing differential thermal analysis, and comprises:

• two receptacles (50, 51) having substantially identical thermal properties, for receiving substantially identical samples (84, 84');
• means (56, 57, 63) for delivering or extracting heat power to or from said samples;
• heater or cooling means (56, 57) for differentially heating or cooling said samples so as to impose an initial temperature difference of known magnitude between the samples; and
• measurement means (54, 55, 58) for measuring the instantaneous temperature of said samples and their temperature difference;

said control and analysis means comprising:

• control means (60, 67, 70) for controlling said means (56, 57, 63) for delivering or extracting heat power to or from the samples, and adapted to subject said samples either to a same temperature variation over time or to a same heat power while maintaining their temperature difference constant and equal to said initial difference; and
• means (60) for calculating said thermal property of the samples from at least knowledge of said initial temperature difference, of the rate at which the temperature of one of the samples varies over time, and of the difference in the power delivered to or extracted from said samples by the corresponding means in order to maintain said temperature difference constant.

13. Thermal analysis apparatus for determining a thermal property of a sample, the apparatus comprising a differential calorimeter measurement head (TM), **characterized in that** it further comprises control means (MCA) for controlling said measurement head and for analyzing data obtained by the measurement, the control means being adapted to implement a method according to any of claims 1 to 10, and wherein said differential calorimeter measurement head (TM) is a head for performing differential thermal analysis, and comprises:

• two receptacles (50, 51) having substantially identical thermal properties, for receiving substantially identical samples (84, 84');
• means (56, 57, 63) for delivering or extracting heat power to or from said samples; and
• heater or cooling means (56, 57) for differentially heating or cooling said samples so as to impose an initial temperature difference of known magnitude between the samples; and
• measurement means (54, 55, 58) for measuring the instantaneous temperature of said samples, their temperature difference and an heat flux entering or leaving each sample;

said control and analysis means comprising:

• control means (60, 67, 70) for controlling said means (56, 57, 63) for delivering or extracting heat power to or from the samples, said control means being adapted to subject said samples either to a same temperature variation or to a same heat power; and
• means (60) for calculating said thermal property of the samples from at least knowledge of said heat exchange coefficient, of said initial temperature difference, of the rate at which the temperature of one of the samples varies, and of the instantaneous temperature difference between said samples

14. Thermal analysis apparatus according to any of claims 11 to 13, wherein said receptacles are thermally coupled to a thermal bath (52) by the same known heat transfer coefficient (53, K), said thermal bath being provided with means (63) for delivering or extracting heat power in order to give rise to a variation over time in its temperature.

TM

AMPLIFICATEUR DE
TEMPERATURE ~58
DIFFERENTIELLE

54   51   55

50

56   57

K   53   K

62   52   63

SOURCE DE
COURANT

SOURCE DE   ~61
COURANT

64

AMPLIFICATEUR

65

SOURCE   DE
COURANT

70

CONVERTISSEURS
A/N

66

UNITE DE
COMMANDE ET
DE TRAITEMENT

60

CONVERTISSEURS
N/A

67

MCA

Fig. 1

$$\Delta T = 0$$

## Fig. 2

$$\Delta T = \text{constante}$$

## Fig. 3

Fig. 4

Fig. 5

Fig. 6A

Fig. 6B

## RÉFÉRENCES CITÉES DANS LA DESCRIPTION

**Documents brevets cités dans la description**

- US 5224775 A
- US 6170984 B
- US 6331074 B

**Littérature non-brevet citée dans la description**

- Recent developments in calorimetry. **S. RANDZIO.** Ann. Rep. Prog. Chem. The Royal Society of Chemistry, 1998, vol. 94, 433-504
- **C. EYRAUD ; A. ACCARY.** Analyses thermique et calorimétrique différentielles, Techniques de l'Ingénieur. *traité Analyse et Caractérisation,* 1992, 1-15
- **M. BRUN ; P. CLAUDY.** Méthodes Thermiques, Microcalorimétrie, Techniques de l'Ingénieur. *traité Analyse et Caractérisations,* 1983, 1-23
- **C. B. MURPHY.** Differential Thermal Analysis. *Anal. Chem.,* 1958, vol. 30, 867-872
- **DE E. CHÂTEAU ; J.-L. GARDEN ; O. BOURGEOIS ; J. CHAUSSY.** *Appl. Phys. Lett.,* 2005, vol. 86, 151913